# FASCICULE DE BREVET EUROPEEN

(11) **EP 2 013 549 B1**
(45) Date de publication et mention de la délivrance du brevet: **20.10.2010**
(21) Numéro de dépôt: 07731397.1
(22) Date de dépôt: 02.05.2007
(51) Int. Cl.: F25B 15/02

(54) **DISPOSITIF DE REFROIDISSEMENT PAR ABSORPTION ET VEHICULE AUTOMOBILE ASSOCIE**
ABSORPTIONSKÜHLVORRICHTUNG UND ZUGEHÖRIGES KRAFTFAHRZEUG
ABSORPTION-TYPE COOLING DEVICE AND ASSOCIATED MOTOR VEHICLE

(30) Priorité: 02.05.2006 FR 0651567
(43) Date de publication de la demande: 14.01.2009
(73) Titulaire: Peugeot Citroën Automobiles Société Anonyme, 78140 Velizy Villacoublay (FR); Ecoclim SA, 1950 Sion (CH)
(72) Inventeur: BOUDARD, Emmanuel, F-78960 Voisins Le Bretonneux (FR); BRUZZO, Vital, I-36040 Vicenza (IT)
(74) Mandataire: Blot, Philippe Robert Emile
(86) Numéro de dépôt international: PCT/FR2007/000748
(87) Numéro de publication internationale: WO 2007/125220

(56) Documents cités:
- EP-A- 0 899 521
- EP-A- 1 361 348
- WO-A-03/048659
- DE-A1- 4 307 363
- DE-C1- 4 413 030
- DE-U1- 20 005 951
- JP-A- 5 340 637
- US-A- 4 691 528
- US-A- 5 896 747

## Description

La présente invention concerne un dispositif de refroidissement par absorption selon le préambule de la revendication 1.

On connaît de WO-A-01 18 463, un dispositif du type précité comprenant un générateur dans lequel un fluide mixte comprenant un fluide réfrigérant et un fluide absorbant est séparé pour obtenir un courant gazeux de fluide réfrigérant, et un courant liquide de fluide absorbant.

D'autres dispositifs de refroidissement par absorption sont connus de JP 05340637, US 5 896 747, et de US 4 691 528.

Ce dispositif comprend en outre un condenseur de fluide réfrigérant qui reçoit le courant gazeux et qui permet de reliquéfier le fluide réfrigérant. Ce dispositif comprend un évaporateur de fluide réfrigérant raccordé au condenseur, dans lequel le fluide réfrigérant liquide provenant du condenseur est vaporisé au moyen d'un gicleur. Cette vaporisation produit des frigories qui sont utilisées en vue de la réfrigération, par l'intermédiaire du circuit de réfrigération.

Le fluide réfrigérant évaporé est alors convoyé jusqu'à un absorbeur qui reçoit un courant liquide de fluide absorbant. Le courant liquide est pulvérisé dans l'absorbeur pour former de très fines gouttelettes qui absorbent le fluide réfrigérant évaporé.

Un liquide mixte comprenant le fluide réfrigérant et le fluide absorbant est alors collecté dans le fond de l'absorbeur pour être convoyé jusqu'au générateur.

Un tel dispositif produit dé manière efficace des frigories pouvant être utilisées dans un ensemble de climatisation, sans l'utilisation d'un fluide réfrigérant nuisible pour l'environnement.

Toutefois, si l'on installe sur un véhicule automobile un dispositif du type précité, les accélérations et les inclinaisons du véhicule tendent à perturber le gicleur d'évaporation et la pulvérisation de la solution absorbante. Par ailleurs, un tel dispositif est encombrant.

Un but de l'invention est donc de fournir un dispositif de refroidissement par absorption qui peut être facilement implanté sur un véhicule, de manière compacte.

A cet effet, l'invention a pour objet un dispositif de refroidissement selon les caractéristiques de la revendication 1. La conduite de circulation est munie d'un clapet anti-retour disposé entre le premier échangeur thermique et sa sortie aval afin de ne pas purger le fluide réfrigérant présent dans cette partie de la conduite dans l'évaporateur en cas d'arrêt de la pompe.

Le dispositif selon l'invention peut comprendre une ou plusieurs des caractéristiques des revendications 2 à 9.

L'invention a également pour objet un véhicule automobile selon la revendication 10.

Le véhicule selon l'invention peut comprendre une ou plusieurs des caractéristiques des revendications 11 à 15.

L'invention sera mieux comprise à la lecture de la description qui va suivre, donnée uniquement à titre d'exemple et faite en se référant aux dessins annexés, sur lesquels:
- la figure 1 est un schéma synoptique fonctionnel d'un premier dispositif de refroidissement selon l'invention ;
- la figure 2 est une vue schématique en coupe transversale suivant un plan vertical d'un ensemble évaporateur-absorbeur du Dispositif do la figure 1 ;
- la figure 3 est un schéma synoptique fonctionnel des moyens de chauffage du générateur du dispositif de la figure 1 ;
- les figures 4A à 4C sont des vues schématiques en coupe transversale suivant un plan horizontal de trois variantes d'une face avant d'un véhicule équipé du premier dispositif selon l'invention ; et
- la figure 5 est une vue analogue à la figure 1 pour un deuxième dispositif de refroidissement selon l'invention.

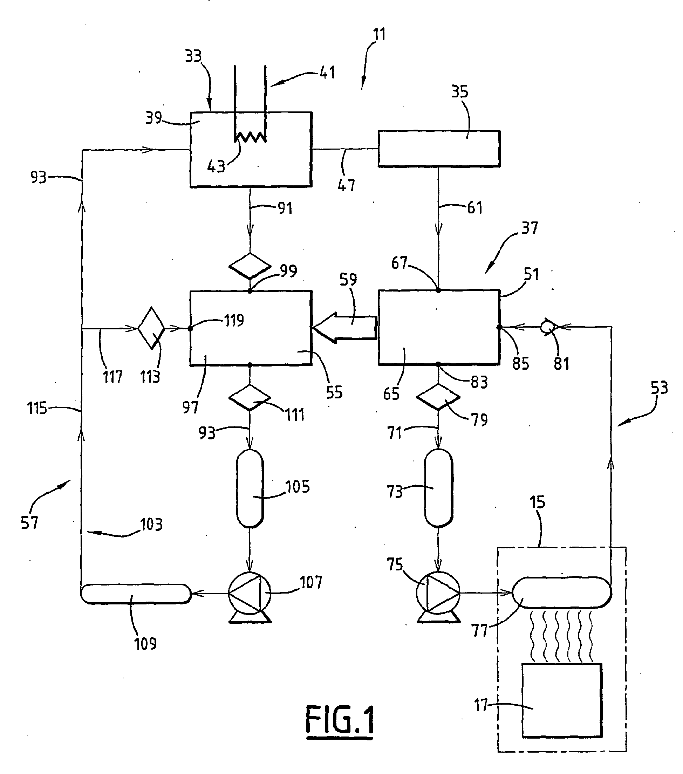

Le premier dispositif 11 de refroidissement par absorption selon l'invention, représenté sur la figure 1, est par exemple disposé dans un véhicule automobile. Le véhicule comprend notamment un habitacle 15 et un ensemble 17 de climatisation de l'habitacle mis en relation d'échange thermique avec le dispositif 11.

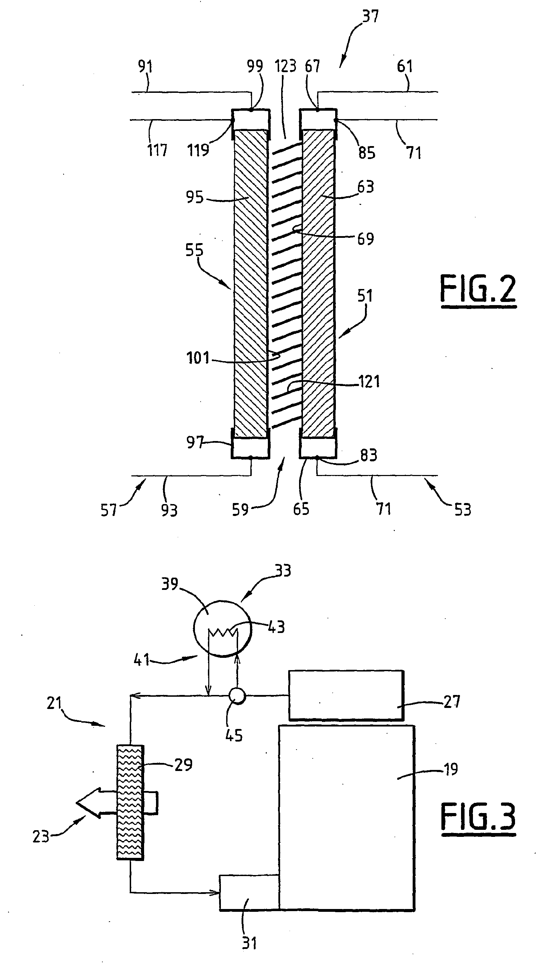

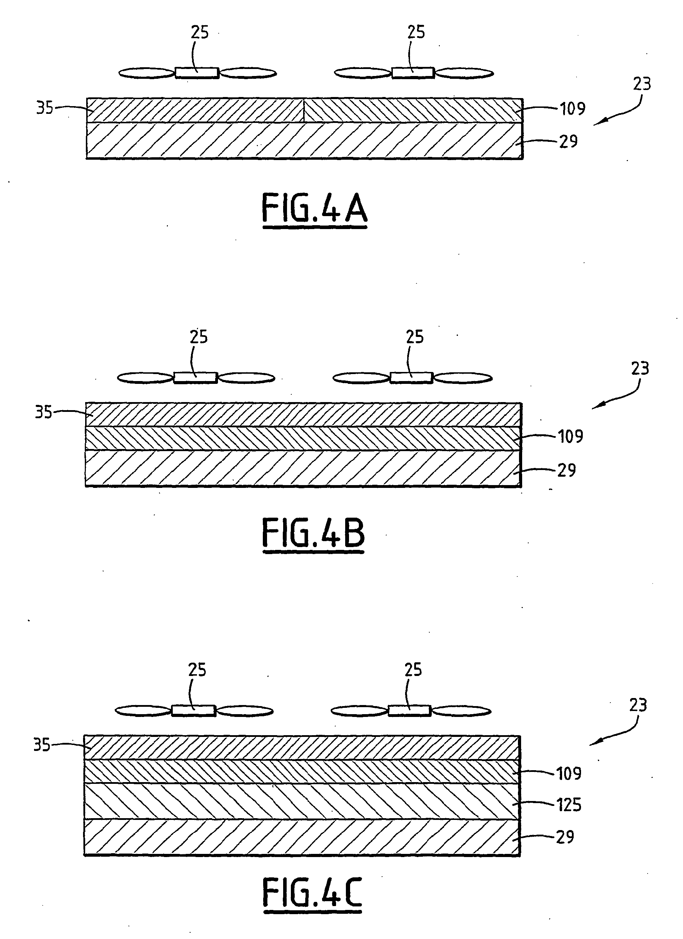

Le véhicule comprend en outre, comme illustré par les figures 3 et 4A, un moteur 19 muni d'un circuit 21 de refroidissement moteur, et une face avant 23 apte à recevoir un flux d'air extérieur par l'intermédiaire d'un ou de plusieurs ventilateurs 25 représentés sur la figure 4A.

Comme illustré par la figure 3 et de manière classique, le circuit 21 de refroidissement moteur comprend un boîtier 27 de sortie d'eau du moteur utilisé notamment pour réchauffer l'habitacle, un radiateur 29 disposé sur la face avant 23 destiné à refroidir l'eau venant du moteur et un collecteur d'eau 31.

En référence à la figure 1, le dispositif 11 comprend un générateur 33 de fluide réfrigérant et de fluide absorbant par séparation d'un fluide mixte, un condenseur 35 de fluide réfrigérant évaporé et un ensemble évaporateur-absorbeur 37.

Le générateur 33 comprend une enceinte 39 destinée à recevoir le fluide mixte formé par un mélange de fluide réfrigérant liquide et de fluide absorbant liquide.

Le fluide absorbant est par exemple formé par une solution de bromure de lithium et le fluide réfrigérant est formé par de l'eau.

En variante, le fluide absorbant est formé par de l'eau et le fluide réfrigérant par de l'ammoniaque.

Les moyens de chauffage comprennent une conduite 41 de circulation du liquide de refroidissement moteur comprenant une région 43 disposée dans l'enceinte 39 pour mettre en relation d'échange thermique le liquide de refroidissement moteur avec le fluide mixte contenu dans l'enceinte 39.

Comme illustré par la figure 3, la conduite 41 est piquée à son entrée sur le circuit de refroidissement moteur 21 par l'intermédiaire d'une vanne de régulation 45, disposée en aval du boîtier de sortie d'eau 27 et en amont du radiateur 29. Préférentiellement, la vanne 45 est située proche ou suffisamment proche pour bénéficier d'un chauffage maximal. La conduite 41 débouche à sa sortie dans le circuit de refroidissement moteur 21 en aval de la vanne 45, et en amont du radiateur 29. Si un dispositif destiné à réchauffer l'eau pour le confort habitacle existe sur le circuit d'eau, il sera avantageusement placé en amont de la conduite 41.

Le condenseur 35 est raccordé au générateur 33 par une conduite de passage 47 de fluide réfrigérant évaporé.

Comme illustré par la figure 4A, le condenseur 35 est disposé dans la face avant 23 du véhicule, sur le radiateur 29, en amont par rapport au sens de circulation d'air dans la face avant 23. Il est utilisé pour changer de phase le fluide réfrigérant d'un état vaporisé à un état liquide.

L'ensemble 37 comprend un évaporateur 51, un circuit de réfrigération 53 destiné à transmettre les frigories produites dans l'évaporateur 51, un absorbeur 55 raccordé à l'évaporateur 51, un circuit de refroidissement 57 de l'absorbeur 55, et des moyens 59 de convoyage du fluide réfrigérant évaporé entre l'évaporateur 51 et l'absorbeur 55.

Dans l'exemple illustré à la figure, l'évaporateur 51 est raccordé au condenseur 35 par une conduite 61 d'alimentation en fluide réfrigérant liquide.

Comme illustré par la figure 2, l'évaporateur 51 comprend au moins une plaque poreuse 63 et un collecteur 65 de fluide réfrigérant liquide disposé sous une partie aval inférieure de la plaque 63.

La plaque 63 peut comprendre, dans sa partie amont supérieure, une entrée 67 d'alimentation en fluide réfrigérant liquide dans laquelle débouche la conduite d'alimentation 61. La plaque 63 présente en outre une surface d'évaporation d'où le gaz partira à travers une surface 69 sensiblement plane et verticale s'étendant en regard de l'absorbeur 55.

Dans le mode de réalisation illustré sur la figure. 1, le circuit de réfrigération 53 comprend une conduite 71 de circulation de fluide réfrigérant, et, montés en série d'amont en aval sur la conduite 71, un réservoir de fluide réfrigérant 73, une pompe 75 et un premier échangeur de chaleur 77.

Le circuit de réfrigération 53 comprend en outre une vanne d'obturation 79 pilotable disposée sur la conduite 71 entre l'évaporateur 51 et le réservoir 73.

Un clapet anti-retour 81 est disposé entre le premier échangeur de chaleur 77 et l'évaporateur 51 afin de bloquer le fluide présent entre l'échangeur de chaleur 77 et le clapet anti-retour 81 lorsque la pompe 75 est à l'arrêt.

La conduite de circulation 71 s'étend entre une entrée amont 83 débouchant dans le collecteur 65 et une sortie aval 85 débouchant dans une partie amont supérieure de la plaque poreuse 63, située au voisinage de l'entrée d'alimentation 67 en fluide réfrigérant.

Le fluide réfrigérant liquide collecté dans le collecteur 65 alimente donc la conduite de circulation 71.

Il y a donc en amont de la plaque poreuse 63 une région de mélange du fluide réfrigérant issu de la conduite d'alimentation 61 et du fluide réfrigérant circulant dans le circuit de réfrigération 53. On comprend donc qu'il puisse exister une conduite optionnelle qui communique entre la conduite d'alimentation 61 et le réservoir 73.

Le réservoir 73 présente un volume sensiblement supérieur à celui de la conduite 71 de circulation. Ce volume est par exemple au moins 1,5 fois supérieur à celui de la conduite de circulation 71.

La pompe 75 fonctionne de manière continue à un débit compris entre 100 et 5000 litres par heure et, par exemple sensiblement, égal à 1000 litres par heure.

L'échangeur de chaleur 77 est mis directement en relation d'échange thermique avec l'ensemble de climatisation 17.

La vanne 79 est disposée entre le collecteur 65 et le réservoir 73 pour empêcher l'évaporation du fluide réfrigérant contenu dans le réservoir 73 vers l'évaporateur 51 lorsque le dispositif 11 est inactif. Préférentiellement, on pilote la fermeture de la vanne 79 en fonction d'un niveau dans le réservoir 73 à ne pas dépasser lorsque la pompe 75 est arrêtée. On comprend ainsi que dans le cas de la conduite optionnelle, citée ci-dessus, une vanne est nécessaire pour arriver au même résultat en amont du piquage de ladite conduite.

Préférentiellement, l'échangeur de chaleur 77 est monté à une altitude plus élevée que le réservoir 73 afin de faire migrer vers le réservoir 73 par gravité le fluide présent entre l'échangeur de chaleur 77 et le réservoir 73 lorsque la pompe 75 est à l'arrêt.

L'absorbeur 55 est raccordé au générateur 33 par une conduite 91 d'alimentation en fluide absorbant liquide et par une conduite 93 d'évacuation de fluide mixte liquide.

Comme illustré par la figure 2, il comprend une plaque poreuse 95 d'absorption et un collecteur 97 de fluide mixte disposé sous une partie aval inférieure de la plaque 95.

La plaque 95 peut présenter, dans sa partie amont supérieure, une entrée 99 supérieure d'alimentation en fluide absorbant liquide. La conduite 91 d'alimentation débouche dans cette entrée 99.

La plaque 95 présente en outre une surface d'absorption pour le passage de gaz provenant de l'évaporateur 51 vers la surface 101 sensiblement plane et verticale disposée en regard de la surface d'évaporation 69 de l'évaporateur 51.

Le circuit de refroidissement 57 comprend une conduite de recirculation 103 de fluide mixte et, montés d'amont en aval sur la conduite 103, un réservoir de fluide mixte 105, une pompe de circulation de fluide mixte 107, et un deuxième échangeur thermique 109. Le circuit de refroidissement 57 comprend en outre une vanne optionnelle 111 d'isolation du réservoir 105. Il peut, à la manière du clapet 81, être prévu une vanne ou un clapet anti-retour 113. Il peut également être envisagé qu'une vanne ou un clapet anti-retour puisse être monté en amont de l'entrée du générateur 33. Enfin, il peut également être envisagé qu'une vanne ou un clapet anti-retour puisse être monté sur la conduite 47, c'est-à-dire entre le générateur 33 et le condenseur 35 afin de réguler plus finement le courant gazeux du fluide réfrigérant arrivant dans le condenseur 35.

La conduite de circulation 103 comprend une partie amont 115 formée par une partie amont de la conduite 93 d'évacuation raccordée au collecteur 97, et une partie aval 117 de dérivation reliant la partie amont 115 à une entrée 119 d'alimentation de la plaque d'absorption 95 en fluide mixte liquide recyclé.

Comme illustré sur la Figure 2, l'entrée 119 est située dans la partie supérieure de la plaque 95, au voisinage de l'entrée 99 d'alimentation en fluide absorbant. Ainsi, l'amont de la plaque 95 forme une région de mélange entre le fluide absorbant liquide et le fluide mixte liquide recyclé. Comme pour le circuit du fluide réfrigérant, une conduite optionnelle peut être prévue pour communiquer directement entre la conduite 91 et le réservoir 105.

Le réservoir 105 est monté sur la partie amont 115 de la conduite 103. Son volume est sensiblement égal ou inférieur au volume de la conduite de recirculation 103.

Les moyens de guidage optionnels 59 sont formés par des surfaces partiellement ouvertes 121 parallèles disposées entre la surface d'évaporation 69 et la surface d'absorption 101. Les surfaces 121 comportent des claires-voies inclinées dans l'exemple vers le bas depuis la surface d'évaporation 69 vers la surface d'absorption 101. A titre de variante, une grille peut être prévue soit en alternative soit en complément des claires-voies 121. Dans ce deuxième cas, préférentiellement, l'ensemble forme un sandwich formé consécutivement de la surface d'évaporation 69, une grille, les surfaces 121 munies de claires-voies, une grille et la surface d'absorption 101.

L'espace délimité entre les surfaces 69 et 101 forme une chambre 123 de migration du réfrigérant évaporé depuis la surface d'évaporation de la surface 69 de l'évaporateur 51 vers la surface d'absorption de la surface 101 de l'absorbeur 55.

La pompe de circulation du fluide mixte 107 fonctionne de manière continue. Elle présente un débit compris entre 100 litres par heure et 5000 litres par heure, de préférence sensiblement égal à 1000 litres par heure.

De manière alternative et pour simplifier le dispositif 11, La pompe de circulation du fluide mixte 107 et la pompe de circulation du fluide réfrigérant 75 peuvent être propulsées par un moteur commun (non représenté).

Le deuxième échangeur de chaleur 109 est monté sur la face avant 23 du véhicule en amont du radiateur 29, à côté du condenseur 35 dans l'exemple illustré par la figure 4A.

La vanne 111 est interposée entre le collecteur 97 et le réservoir 105. La vanne 113 est montée sur la partie aval 117 de la conduite 103.

Une conduite optionnelle munie d'une pompe peut être prévue de la sortie de la pompe 75 vers la sortie de la pompe 107 afin de pouvoir changer rapidement la concentration du fluide mixte en amont du deuxième échangeur 109. Cela est notamment idéal pour éviter la cristallisation des sels compris dans le fluide mixte par dissolution du fluide réfrigérant dans le fluide mixte, c'est-à-dire par diminution de la concentration en sels du fluide mixte.

Le fonctionnement du premier dispositif 11 selon l'invention pour la climatisation de l'habitacle 15 d'un véhicule automobile, va maintenant être décrit.

En fonctionnement, quand l'ensemble de climatisation 15 doit refroidir l'habitacle 11, la vanne 45 de régulation du liquide de refroidissement moteur est activée pour faire circuler une partie du liquide de refroidissement moteur à travers la région d'échange thermique 43 dans le générateur 33. Le générateur 33 contient une quantité de fluide mixte liquide suffisante pour immerger la région 43.

Sous l'effet du chauffage par la région 43, le fluide mixte liquide est séparé en un courant gazeux de fluide réfrigérant et un fluide absorbant liquide.

Le courant gazeux est alors collecté dans la conduite de passage 47, puis condensé dans le condenseur 35 pour former un courant de fluide réfrigérant liquide. Le courant de fluide réfrigérant liquide est alors introduit dans l'évaporateur 51 à travers l'entrée d'alimentation 67. Il arrose ainsi la plaque poreuse 63 d'évaporation, ce qui permet le passage du fluide réfrigérant sous forme de gaz à travers la surface 69 de cette plaque 63, issu de l'évaporation d'une partie du fluide réfrigérant liquide.

Cette évaporation produit des frigories qui sont collectées par le fluide réfrigérant liquide circulant dans la plaque 63. Le fluide réfrigérant liquide refroidi est recueilli dans le collecteur 65. La température du fluide réfrigérant liquide dans le collecteur 65 est alors par exemple comprise entre 2 et 4°C.

La vanne 79 est ouverte de sorte que le liquide contenu dans le collecteur 65 alimente en continu le réservoir 73. La pompe 75 est activée pour pomper le fluide réfrigérant liquide à travers le premier échangeur 77 où il subit un échange thermique avec l'ensemble de climatisation 17. Durant cet échange thermique, le liquide se réchauffe, par exemple, de 4°C à 10°C environ.

Puis, le fluide réfrigérant liquide réchauffé passe à travers le clapet anti-retour 81 et est réintroduit dans l'évaporateur 51 à travers la sortie aval 85. Il se mélange donc au fluide réfrigérant liquide issu de la conduite d'alimentation 61 en amont de la plaque 63.

Le fluide réfrigérant évaporé sur la surface d'évaporation de la surface 69 se dirige vers la surface d'absorption de la surface 101 à travers la chambre 123, les claires-voies de la surface 121 permettant notamment d'éviter les éclats de liquides échappés des surfaces.

Dans le même temps, la vanne 111 et la pompe 107 de circulation du fluide mixte sont activées, de sorte qu'un courant de fluide mixte liquide circule depuis l'absorbeur 55 à travers la partie amont 103 et la partie aval 117.

Le fluide absorbant liquide provenant du générateur 33 est introduit dans l'absorbeur 55 à travers la conduite d'alimentation 91 pour arroser la plaque 95 d'absorption à travers l'entrée 99. Le fluide absorbant liquide qui circule dans la plaque 95 collecte donc le fluide réfrigérant gazeux à travers la surface 101 convoyé depuis la chambre 123, et se réchauffe. Le fluide mixte liquide ainsi formé s'écoule vers le collecteur 97 de fluide mixte.

Le fluide mixte liquide est alors introduit dans le réservoir 105 puis pompé à travers la pompe 107 jusqu'au deuxième échangeur de chaleur 109 où il est refroidi par convection d'air. Il est ensuite séparé en une première partie qui est réintroduite dans le générateur 33 et une deuxième partie qui est recyclée dans l'absorbeur 55 à travers l'entrée 119. Le fluide mixte liquide de réfrigération recyclé se mélange donc au fluide absorbant liquide avant la plaque 95 et le refroidit.

Dans une première variante de véhicule automobile, représentée sur la figure 4B, le deuxième échangeur de chaleur 109 est monté directement sur le radiateur 29. Toutefois, à la différence du véhicule représenté sur la figure 4A, le condenseur 35 est monté sur le deuxième échangeur 109 en amont de celui-ci par rapport au sens de circulation d'air.

En perfectionnement à la première variante, le condenseur 35 et le deuxième échangeur 109 ont un même organe de refroidissement (surface d'échange et boite à eau thermiquement communicante) avec deux circuits de circulation distincts ce qui permet de compacter l'épaisseur du système par rapport à la figure 4B. En effet, les fluides du condenseur 35 et du deuxième échangeur 109 sont proches en température de fonctionnement.

Dans la variante du véhicule de la Figure 4B représentée sur la figure 4C, un refroidisseur d'air de suralimentation 125 est interposé entre le deuxième échangeur 109 et le radiateur 29.

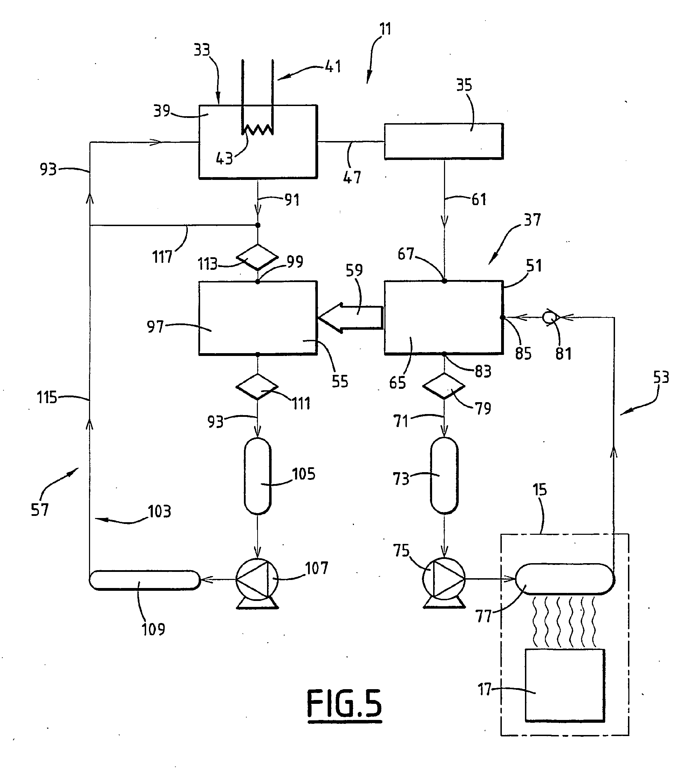

Dans une autre variante illustrée par la figure 5, la partie aval 117 de la conduite de recirculation 103 débouche dans la conduite d'alimentation 91 en fluide absorbant liquide, en amont de l'absorbeur 55.

La vanne 113 est alors disposée en aval du point de piquage de la partie aval 117 sur la conduite d'alimentation 91.

Dans une autre variante, le circuit de réfrigération 57 est dépourvu de réservoir 105 sur la conduite de recirculation 93. Le réservoir est alors formé par l'enceinte 39.

Grâce à l'invention qui vient d'être décrite, il est possible de disposer d'un dispositif 11 de refroidissement par absorption, d'implantation facile et compacte dans un véhicule automobile.

En effet, le fluide réfrigérant utilisé dans le cycle d'absorption-désorption, est également utilisé comme fluide de transfert thermique vers l'ensemble de climatisation 17 dans le circuit de réfrigération 53, de sorte que l'architecture de ce circuit et sa mise en oeuvre sont simplifiées.

Le poids du système et son coût sont également notablement diminués.

Avantageusement, l'utilisation d'un ensemble commun 37 absorbeur-évaporateur augmente la capacité de réfrigération du dispositif et favorise son rendement.

## Revendications

1. Dispositif (11) de refroidissement par absorption, du type comprenant :
- un générateur (33) de fluide réfrigérant et de fluide absorbant par séparation d'un fluide mixte ;
- un condenseur (35) de fluide réfrigérant, raccordé au générateur (33);
- un évaporateur (51) de fluide réfrigérant, raccordé au condenseur (35) par une conduite (61) d'alimentation en fluide réfrigérant, l'évaporateur (51) présentant au moins une région (63) d'évaporation du fluide réfrigérant, dans laquelle débouche la conduite d'alimentation (61) ;
- un absorbeur (55) de fluide réfrigérant, raccordé à la région d'évaporation (63), et raccordé au générateur (33) par une conduite (91) d'alimentation en fluide absorbant et une conduite (93) d'évacuation de fluide mixte ; et
- un circuit (53) de réfrigération comprenant une conduite (71) de circulation de fluide réfrigérant présentant une entrée amont (83) et une sortie aval (85) raccordées à la région d'évaporation (63), la conduite (71) comprenant un réservoir (73) de fluide réfrigérant, une pompe (75) et un premier échangeur thermique (77) montés en série,
**caractérisé en ce que** la conduite de circulation (71) est munie d'un clapet anti-retour (81) disposé entre le premier échangeur thermique (77) et sa sortie aval (85) afin de ne pas purger le fluide réfrigérant présent dans cette partie de la conduite (71) dans l'évaporateur (51) en cas d'arrêt de la pompe (75),
et **en ce que** la conduite de ovulation (71) est munie d'une vanne (79) d'obturation pilotable disposée en amont du réservoir (73) afin de limiter le remplissage dudit réservoir.

2. Dispositif (11) selon la revendication 1 **caractérisé en ce que** le premier échangeur thermique (77) est monté à une altitude plus haute que le réservoir (73) afin d'autoriser par gravité le remplissage du réservoir (73) par le fluide réfrigérant présent entre le premier échangeur thermique (77) et le réservoir (73) lorsque la pompe (75) est arrêtée.

3. Dispositif (11) selon l'une quelconque des revendications précédentes, **caractérisé en ce que** le circuit de réfrigération (53) débouche en amont dans une partie aval (83) de la région d'évaporation (63) et débouche en aval dans une partie amont (85) de la région d'évaporation (63).

4. Dispositif (11) selon l'une quelconque des revendications précédentes, **caractérisé en ce que** la région d'évaporation comprend au moins une plaque d'évaporation (63), le circuit de réfrigération (53) comprenant des moyens de mouillage (85, 67) de la plaque d'évaporation alimentés par le circuit de réfrigération (53) et par la conduite d'alimentation en fluide réfrigérant (61).

5. Dispositif (11) selon l'une quelconque des revendications précédentes, **caractérisé en ce que** la conduite d'évacuation (93) comprend un circuit (57) de réfrigération comprenant un réservoir (105) de fluide mixte, une pompe (107) et un deuxième échangeur thermique (109) montés en série et une conduite (117) de dérivation de fluide mixte présentant une entrée (97) de conduite (115) amont commune à la conduite d'évacuation (93) et une sortie aval (119) raccordées à la région d'absorption (95) afin de pouvoir recycler une partie du fluide mixte directement dans l'absorbeur (55).

6. Dispositif (11) selon l'une quelconque des revendications, **caractérisé en ce que** la conduite de dérivation (117) comporte un clapet anti-retour (113).

7. Dispositif (11) selon l'une quelconque des revendications 5 ou 6, **caractérisé en ce que** le circuit de refroidissement (57) comprend une vanne (111) d'obturation pilotable disposée en amont du réservoir de fluide mixte (105).

8. Dispositif (11) selon l'une des revendications 5 à 7, **caractérisé en ce que** la région d'absorption comprend au moins une plaque d'absorption (95), le circuit de refroidissement (57) comprenant des moyens de mouillage (119, 99) de la plaque d'absorption alimentés par la conduite de dérivation (117) et par la conduite d'alimentation en absorbant (81).

9. Dispositif (11) selon l'une quelconque des revendications 5 à 8 **caractérisé en ce que** la région d'évaporation (63) et la région d'absorption (95) sont situées en regard l'une de l'autre et délimitant entre elles une chambre (123) de migration de fluide réfrigérant évaporé depuis l'évaporateur (51) vers l'absorbeur (55).

10. Véhicule automobile, **caractérisé en ce qu'**il comprend :
- une face avant (23) apte à recevoir un flux d'air extérieur ;
- un ensemble (17) de climatisation de l'habitacle (15) ; et
- un dispositif (11) selon l'une quelconque des revendications précédentes, le premier échangeur de chaleur (77) étant mis en relation d'échange thermique avec l'ensemble de climatisation (17).

11. Véhicule selon la revendication 10, comprenant un dispositif (11) selon l'une quelconque des revendications 5 à 9, **caractérisé en ce que** le deuxième échangeur de chaleur (109) et le condenseur (35) de fluide réfrigérant sont disposés côte à côte sur la face avant (23) en première position pour recevoir l'air le plus trais disponible.

12. Véhicule selon la revendication 10, comprenant un dispositif selon l'une quelconque des revendications 5 à 9, **caractérisé en ce que** le deuxième échangeur de chaleur (109) et le condenseur (35) de fluide réfrigérant sont disposés l'un sur l'autre sur la face avant (23) en première position pour recevoir l'air le plus frais disponible,

13. Véhicule salon la revendication 12, **caractérisé** on ce que le deuxième échangeur de chaleur (109) et le condenseur (35) ont un même organe de refroidissement avec deux circuits de circulation distincts afin de compacter l'épaisseur de la face avant (23).

14. Véhicule automobile selon l'une des revendications 10 à 13, **caractérisé en ce que** le générateur (33) est alimenté par la chaleur produite par le moteur dudit véhicule.

15. Véhicule automobile selon la revendication 14, **caractérisé en ce que** l'alimentation du générateur (33) est pilotée par l'intermédiaire d'une vanne de régulation de débit (45) placée sur le circuit de refroidissement (21) du moteur.

## Claims

1. Apparatus (11) for cooling by absorption, of the type comprising:
- a generator (33) of refrigerant fluid and absorbent fluid by separation of a mixed fluid;
- a refrigerant fluid condenser (35) connected to the generator (33);
- a refrigerant fluid evaporator (51) connected to the condenser (35) by a refrigerant fluid supply duct (61), the evaporator (51) having at least one refrigerant fluid evaporation region (63), into which the supply duct (61) opens out;
- a refrigerant fluid absorber (55) connected to the evaporation region (63) and connected, by way of an absorbent fluid supply duct (91) and a mixed fluid removal duct (93), to the generator (33); and
- a refrigeration circuit (53) including a refrigerant fluid circulation duct (71) having an upstream inlet (83) and a downstream outlet (85) both connected to the evaporation region (63), the duct (71) including a refrigerant fluid reservoir (73), a pump (75) and a first heat exchanger (77) installed in series,
**characterised in that** the circulation duct (71) is provided with a non-return valve (81) arranged between the first heat exchanger (77) and its downstream outlet (85) in order not to empty the refrigerant fluid present **in that** part of the duct (71) into the evaporator (51) when the pump (75) stops,
and **in that** the circulation duct (71) is provided with a pilot-controlled shut-off valve (79) arranged upstream of the reservoir (73) in order to limit the filling of said reservoir.

2. Apparatus (11) according to claim 1, **characterised in that** the first heat exchanger (77) is installed at a greater height than the reservoir (73) in order to allow the filling, by means of gravity, of the reservoir (73) with the refrigerant fluid present between the first heat exchanger (77) and the reservoir (73) when the pump (75) is stopped.

3. Apparatus (11) according to any one of the preceding claims, **characterised in that** the refrigeration circuit (53) is, at the upstream end, open to a downstream part (83) of the evaporation region (63) and, at the downstream end, open to an upstream part (85) of the evaporation region (63).

4. Apparatus (11) according to any one of the preceding claims, **characterised in that** the evaporation region includes at least one evaporation plate (63), the refrigeration circuit (53) including means (85, 67) for wetting the evaporation plate, which wetting means are supplied by the refrigeration circuit (53) and by the refrigerant fluid supply duct (61).

5. Apparatus (11) according to any one of the preceding claims, **characterised in that** the removal duct (93) includes a refrigeration circuit (57) including a reservoir (105) for mixed fluid, a pump (107) and a second heat exchanger (109) installed in series and a mixed fluid offtake duct (117) which has an upstream inlet (97) to the duct (115) in common with the evacuation duct (93) and a downstream outlet (119) both connected to the absorption region (95) in order to be able to recycle part of the mixed fluid directly into the absorber (55).

6. Apparatus (11) according to any one of the claims, **characterised in that** the offtake duct (117) includes a non-return valve (113).

7. Apparatus (11) according to any one of claims 5 or 6, **characterised in that** the cooling circuit (57) includes a pilot-controlled shut-off valve (111) arranged upstream of the mixed fluid reservoir (105).

8. Apparatus (11) according to one of claims 5 to 7, **characterised in that** the absorption region includes at least one absorption plate (95), the cooling circuit (57) including means (119, 99) for wetting the absorption plate, which wetting means are supplied by the offtake duct (117) and by the absorbent supply duct (91).

9. Apparatus (11) according to any one of claims 5 to 8, **characterised in that** the evaporation region (63) and the absorption region (95) are located facing one another and they delimit between them a chamber (123) in which evaporated refrigerant fluid migrates from the evaporator (51) towards the absorber (55).

10. Motor vehicle, **characterised in that** it includes:
- a front end (23) arranged to receive a flow of external air;
- a unit (17) for air-conditioning of the interior compartment (15); and
- an apparatus (11) according to any one of the preceding claims, the first heat exchanger (77) being located in a heat exchange relationship with the air-conditioning unit (17).

11. Vehicle according to claim 10 including an apparatus (11) according to any one of claims 5 to 9, **characterised in that** the second heat exchanger (109) and the refrigerant fluid condenser (35) are arranged side by side on the front end (23) in a forward position in order to receive the coolest air available.

12. Vehicle according to claim 10 including an apparatus according to any one of claims 5 to 9, **characterised in that** the second heat exchanger (109) and the refrigerant fluid condenser (35) are arranged one on top of the other on the front end (23) in a forward position in order to receive the coolest air available.

13. Vehicle according to claim 12, **characterised in that** the second heat exchanger (109) and the condenser (35) have a common cooling element with two separate circulation circuits, in order to make the thickness of the front end (23) more compact.

14. Motor vehicle according to one of claims 10 to 13, **characterised in that** the generator (33) is supplied with the heat produced by the engine of said vehicle.

15. Motor vehicle according to claim 14, **characterised in that** the supply to the generator (33) is pilot-controlled by means of a flow regulation valve (45) located in the cooling circuit (21) of the engine.

## Patentansprüche

1. Absorptionskühlvorrichtung (11) des Typs, umfassend:
- einen Generator (33) von Kühl- und Absorptionsfluid durch Trennen eines Fluidgemisches;
- einen an den Generator (33) angeschlossenen Kühlfluid-Kondensator (35);
- einen Kühlfluid-Verdampfer (51), der mit dem Kondensator (35) über eine Kühlfluid-Speiseleitung (61) verbunden ist, wobei der Verdampfer (51) mindestens eine Verdampfungszone (63) des Kühlfluids aufweist, in die die Speiseleitung (61) einmündet;
- einen Kühlfluid-Absorber (55), der an die Verdampfungszone (63) und über eine Absorptionsfluid-Speiseleitung (91) und eine Fluidgemisch-Abführleitung (93) an den Generator (33) angeschlossen ist; und
- einen Kühlkreislauf (53), der eine Kühlfluid-Zirkulationsleitung (71) umfasst, die einen stromaufwärtigen Eingang (83) und einen stromabwärtigen Ausgang (85) aufweist, die mit der Verdampfungszone (63) verbunden sind, wobei die Leitung (71) einen Kühlfluid-Speicher (73), eine Pumpe (75) und einen ersten Wärmeaustauscher (77), die in Serie montiert sind, umfasst,
**dadurch gekennzeichnet, dass** die Zirkulationsleitung (71) mit einer Rückschlagklappe (81) versehen ist, die zwischen dem ersten Wärmaustauscher (77) und seinem stromabwärtigen Ausgang (85) angeordnet ist, um das in diesem Teil der Leitung (71) in dem Verdampfer (51) vorhandene Kühlfluid im Falle einer Unterbrechung der Pumpe (75) nicht herauszuspülen,
und **dadurch**, dass die Zirkulationsleitung (71) mit einem steuerbaren Verschlussventil (79) versehen ist, das stromaufwärts von dem Speicher (73) angeordnet ist, um das Befüllen des Speichers zu begrenzen.

2. Vorrichtung (11) nach Anspruch 1, **dadurch gekennzeichnet, dass** der erste Wärmaustauscher (77) in einer Höhe höher als der Speicher (73) montiert ist, um durch Schwerkraft das Befüllen des Speichers (73) mit dem zwischen dem ersten Wärmaustauscher (77) und dem Speicher (73) vorhandenen Kühlfluid zu ermöglichen, wenn die Pumpe (75) unterbrochen wird.

3. Vorrichtung (11) nach einem der vorhergehenden Ansprüche, **dadurch gekennzeichnet, dass** der Kühlkreislauf (53) stromaufwärts in einen stromabwärtigen Teil (83) der Verdampfungszone (63) und stromabwärts in einen stromaufwärtigen Teil (85) der Verdampfungszone (63) einmündet.

4. Vorrichtung (11) nach einem der vorhergehenden Ansprüche, **dadurch gekennzeichnet, dass** die Verdampfungszone (63) mindestens eine Verdampfungsplatte (63) umfasst, der Kühlkreislauf (53) Befeuchtungsmittel (85, 67) der Verdampfungsplatte umfasst, die durch den Kühlkreislauf (53) und durch die Kühlfluid-Speiseleitung (61) gespeist werden.

5. Vorrichtung (11) nach einem der vorhergehenden Ansprüche, **dadurch gekennzeichnet, dass** die Abführleitung (93) einen Kühlkreislauf (57) umfasst, der einen Fluidgemisch-Speicher (105), eine Pumpe (107) und einen zweiten Wärmeaustauscher (109) umfasst, die in Serie montiert sind, und eine Fluidgemisch-Abzweigungsleitung (117) umfasst, die einen mit der Abzweigungsleitung (93) gemeinsamen Eingang (97) von Leitung (115) stromaufwärts und einen Ausgang stromabwärts (119) aufweist, die mit der Absorptionszone (95) verbunden sind, um einen Teil des Fluidgemisches direkt in den Absorber (55) recyceln zu können.

6. Vorrichtung (11) nach einem der vorhergehenden Ansprüche, **dadurch gekennzeichnet, dass** die Abzweigungsleitung (117) eine Rückschlagklappe (113) umfasst.

7. Vorrichtung (11) nach einem der Ansprüche 5 oder 6, **dadurch gekennzeichnet, dass** der Kühlkreislauf (57) ein Verschlussventil (111) umfasst, das steuerbar stromaufwärts des Fluidgemisch-Speichers (105) angeordnet ist.

8. Vorrichtung (11) nach einem der Ansprüche 5 bis 7, **dadurch gekennzeichnet, dass** die Absorptionszone mindestens eine Absorptionsplatte (95) umfasst, wobei der Kühlkreislauf (57) Befeuchtungsmittel (119, 99) der Absorptionsplatte umfasst, die durch die Abzweigungsleitung (117) und durch die Absorptionsmittel-Speiseleitung (91) gespeist werden.

9. Vorrichtung (11) nach einem der Ansprüche 5 bis 8, **dadurch gekennzeichnet, dass** die Verdampfungszone (63) und die Absorptionszone (95) gegenüberliegend angeordnet sind und zwischen sich eine Migrationskammer (123) von von dem Verdampfer (51) zu dem Absorber (55) verdampftem Kühlfluid einschließen.

10. Kraftfahrzeug, **dadurch gekennzeichnet, dass** es folgendes umfasst:
- eine Vorderfläche (23), die dazu ausgelegt ist, einen äußeren Luftstrom aufzunehmen;
- eine Klimatisierungseinheit (17) des Fahrgastraums (15); und
- eine Vorrichtung (11) nach einem der vorhergehenden Ansprüche, wobei der erste Wärmeaustauscher (77) mit der Klimaanlageeinheit (17) zum Wärmeaustausch verbunden ist.

11. Fahrzeug nach Anspruch 10, umfassend eine Vorrichtung (11) nach einem der Ansprüche 5 bis 9, **dadurch gekennzeichnet, dass** der zweite Wärmeaustauscher (109) und der Kühlfluid-Kondensator (35) nebeneinander auf der Vorderseite (23) möglichst weit vorne montiert sind, um die frischest mögliche Luft aufzunehmen.

12. Fahrzeug nach Anspruch 10, umfassend eine Vorrichtung nach einem der Ansprüche 5 bis 9, **dadurch gekennzeichnet, dass** der zweite Wärmeaustauscher (109) und der Kühlfluid-Kondensator (35) übereinander auf der Vorderfläche (23) möglichst weit vorne montiert sind, um die frischest mögliche Luft aufzunehmen.

13. Fahrzeug nach Anspruch 12, **dadurch gekennzeichnet, dass** der zweite Wärmeaustauscher (109) und der Kondensator (35) ein und dasselbe Kühlelement mit zwei distinkten umlaufenden Kreisläufen aufweisen, um die Dicke der Vorderseite (23) zu kompaktieren.

14. Kraftfahrzeug nach einem der Ansprüche 10 bis 13, **dadurch gekennzeichnet, dass** der Generator (33) durch die von dem Motor des Fahrzeugs erzeugte Wärme gespeist wird.

15. Kraftfahrzeug nach Anspruch 14, **dadurch gekennzeichnet, dass** die Speisung des Generators (33) mit Hilfe eines das an dem Kühlkreislauf (21) des Motors angeordneten Ausstoß-Regelventils (45) gesteuert wird.
